# EUROPEAN PATENT APPLICATION

(11) **EP 1 862 937 A1**
(43) Date of publication of application: **05.12.2007**
(21) Application number: 06714460.0
(22) Date of filing: 23.02.2006
(51) Int. Cl.: G06F 21/22

(54) **SECURE PROCESSING DEVICE AND SECURE PROCESSING SYSTEM**

(30) Priority: 25.02.2005 JP 2005050419
(71) Applicant: MATSUSHITA ELECTRIC INDUSTRIAL CO., LTD., Osaka 571-8501 (JP)
(72) Inventor: HAGA, Tomoyuki c/o Matsushita El. Ind. Co. Ltd., 2-1-61, Shiromi, Chuo-ku, Osaka 540-6207 (JP); ITO, Yoshikatsu c/o Matsushita El. Ind. Co. Ltd., 2-1-61, Shiromi, Chuo-ku, Osaka 540-6207 (JP); MATSUSHIMA, Hideki c/o Matsushita El. Ind. Co. Ltd., 2-1-61, Shiromi, Chuo-ku, Osaka 540-6207 (JP); SHODA, Yukie c/o Matsushita El. Ind. Co. Ltd., 2-1-61, Shiromi, Chuo-ku, Osaka 540-6207 (JP); KIMURA, Shigehiko c/o Matsushita El. Ind. Co. Ltd., 2-1-61, Shiromi, Chuo-ku, Osaka 540-6207 (JP); OKUYAMA, Hiroshi c/o Matsushita El. Ind. Co. Ltd., 2-1-61, Shiromi, Chuo-ku, Osaka 540-6207 (JP); OIWA, Yasuki c/o Matsushita El. Ind. Co. Ltd., 2-1-61, Shiromi, Chuo-ku, Osaka 540-6207 (JP); KAGAWA, Takafumi c/o Matsushita El. Ind. Co. Ltd., 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2006/303320
(87) International publication number: WO 2006/090800

(57) **Abstract**

A program storage unit 111 stores a plurality of protected programs. The disabled-program list storage unit 117 stores information of disabled protected programs. An execution program selection unit 112 selects one of the protected programs that is not disabled, with reference a disabled-program list. If malicious analysis is detected before the protected program is executed or during the execution of the protected program, a malicious analysis detection unit 116 stops the execution of the protected program, and a disabled-program update unit 118 enters the disabled program into the disabled-program list.

## Description

### Technical Field

The present invention relates to a technique for preventing malicious tampering and analysis of a computer program.

### Background Art

Distribution service of pay digital contents that users can watch and listen to using a PC or a mobile telephone is available. To prevent illegal copying, such digital contents are distributed as encrypted data. For this reason, a computer program for playback the digital contents includes an encryption key for decrypting the encrypted contents. Therefore, if a malicious user analyzes the program for playback the digital contents and succeeds to identify the encryption key, the user can illegally copy the digital contents.

There have been conventional techniques for prevent such a program analysis. Generally, malicious users progressively proceed analysis of a program to which an analysis-prevention technique is applied while trying a different illegal analysis method every time, and finally obtain secret information such as an encryption key. One of the conventional techniques is for disabling execution of the program once malicious analysis is detected, to prevent repetition of the illegal analysis.

### Disclosure of the Invention

### Problem to be Solved by the Invention

However, an operational error by an innocent user who does not intend to illegally analyze and tamper the program might be detected as illegal analysis and tampering. In such a case, since the above-mentioned conventional technique disables execution of the program, it becomes impossible for the user to use the program. This is disadvantage for the user.
The present invention is made in view of the problem described above. The object of the present invention is to provide a secure processing system that can realize both prevention of malicious analysis of a computer program and convenience for an innocent user of the computer program.

### Means to Solve the Problem

To achieve the above-mentioned problem, the present invention provides a secure processing apparatus comprising: a program storage unit that stores a plurality of protected programs that have been generated based on an original program such that execution results of the original program and the protected programs are same; a disabling unit operable to disable one of the protected programs that has been analyzed; a selection unit operable to select one of the protected programs that is not disabled; and an execution unit operable to execute the selected one of the protected programs.

### Advantageous Effects of the Present Invention

With the stated structure, it is possible to prevent re-analysis of the same protected program, by disabling the protected program that has been analyzed by a malicious user. Furthermore, since the secure processing apparatus stores the plurality of protected programs, it is possible to secure the rights of the innocent user to use the program by executing another protected program that is not disabled, even if the analyzed protected program is disabled.

Here, the secure processing apparatus may further comprise: an analysis detection unit operable to judge whether one of the protected programs is analyzed, when the execution unit executes the one of the protected programs, wherein the disabling unit includes a disabled-program list storage subunit that stores a disabled-program list showing disabled protected programs, and a disabled-program entering subunit operable to enter the one of the protected programs in the disabled-program list if the analysis detection unit judges affirmatively.

With the stated structure, since the disabled-program list storage unit stores the disabled-program list, the selection unit can identify a disabled protected program, and select a non-disabled protected program as a protected program to be executed. Moreover, since the disabled-program list is updated by the disabled-program entering unit if the analysis detection unit detects an analyzed protected program, the selection unit can select a non-disabled protected program always with reference to a new disabled-program list.

Here, the disabled-program list may be attached with signature data for authenticating the disabled-program list, and the selection unit may perform verification of the signature data, and if the disabled-programlist is found invalid as a result of the verification, stop selecting one of the protected programs.
With this structure, even if the disabled-program list is tampered with by the malicious user that tries malicious analysis, it is possible to judge whether the disabled-program list has been tampered with by verifying the signature data. Also, if the tampering of the disabled-program list is detected, execution of all the protected programs can be stopped. Therefore, it is possible to prevent malicious analysis.

Here, the protected programs may be obfuscated programs generated by obfuscating the original program, each having a different code depending on an obfuscation method and/or an obfuscation level applied thereto.
With the stated structure, it is possible to make it difficult for the malicious user to analyze the protected program.

Here, one or more of the protected programs may be each obfuscated by encrypting a different partial program among partial programs included in the original program.
With the stated structure, each of the one or more of the protected programs has an encrypted partial program at a different position. Therefore, it is difficult for the malicious user to analyze the protected program.

Here, the partial program of each of the one or more of the protected programs may be encrypted using a different encryption algorithm and/or a different encryption key.
With the stated structure, each of the one or more of the protected programs has an encrypted partial program at a different position. Furthermore, the algorithm and the encryption key are also different. Therefore, it is further difficult for the malicious user to analyze the protected program.

Here, one or more of the protected programs may be each obfuscated by changing an execution order of parallel instructions among a plurality of instructions included in the original program, the parallel instructions having no dependency with each other.
With the stated structure, the one or more of the protected programs are generated based on the parallelismof the original program. Therefore, it is possible to make it difficult for the malicious user to analyze the protected program while securing the same execution result as the original program.

One or more of the protected programs may be each obfuscated by replacing an original instruction included in the original program with an identical instruction that includes one or more instructions, the identical instruction performing processing that is different from the original instruction and outputting a result that is the same as the original instruction.
With the stated structure, the one or more of the protected programs are generated based on the identity of the original program. Therefore, it is possible to make it difficult for the malicious user to analyze the protected program while securing the same execution result as the original program.

Here, one or more of the protected programs maybe each obfuscated by inserting a dummy instruction into the original program, the dummy instruction not affecting a result of the original program.
With the stated structure, the one or more of the protected programs are made redundant with use of the dummy code. Therefore, it is possible to make it difficult for the malicious user to analyze the protected program while securing the same execution result as the original program.

Here, the secure processing apparatus may further comprise an analysis detection unit operable to judge whether one of the protected programs is analyzed when the execution unit executes the one of the programs.
With the stated structure, since the analysis detection unit can detect possibility that the protected program has been analyzed, the disabled-program list can disable a protected program having secret information that is at risk of being exposed.

Here, the analysis detection unit may include a debugger detection subunit operable to detect a debugger while the execution unit executes the one of the protected programs, and disable the debugger if detected, and an instruction subunit operable to give the execution unit an instruction to stop executing the one of the protected programs if the debugger detection subunit detects the debugger, wherein upon reception of the instruction by the instruction subunit, the execution unit may immediately stop executing the one of the protected programs.

With the stated structure, the secure processing apparatus has a function of detecting a debugger. Therefore, the secure processing apparatus can disable the detected debugger to prevent that a protected program in execution is analyzed and secret information thereof is exposed.
Here, the analysis detection unit may include a tampering detection subunit operable to detect tampering with the one of the protected programs, and an instruction subunit operable to give the execution unit an instruction to stop executing the one of the protected programs if the tampering detection subunit detects the tampering, wherein upon reception of the instruction by the instruction subunit, the execution unit may stop executing the one of the protected programs.

With the stated structure, the secure processing apparatus can execute protected programs other than the protected program from which tampering has been detected. Therefore, it is possible to prevent execution of the invalid program without damaging the benefit of the user.
Here, the analysis detection unit may include a log information generation subunit operable to generate analysis log information pertaining to the analysis if the analysis detection unit judges affirmatively.

With the stated structure, it is possible to know what analysis was conducted, by generating the analysis log information pertaining to the analysis. Also, in the testing processes at the development stage of the secure processing apparatus, it is possible to judge whether the analysis detection unit properly detects the analysis.
Here, the secure processing apparatus may be connected with an external server via a network, wherein the log information generation subunit may output the generated analysis log information to the external server.

With the stated structure, it is possible to review what analysis was conducted on the external server, by transmitting the analysis log information to the external server. This means that it is possible to generate a protected program that is more resistant to analysis by reviewing the analysis.
Here, the analysis detection unit may further include a threshold value storage subunit that stores a prescribed threshold value, and an analysis counting subunit operable to count the number of times that the analysis detection unit judges affirmatively, and the disabled-program entering subunit disables the one of the protected programs only when the number exceeds the threshold value.

With the stated structure, the protected program is disabled only when the number of times the analysis is conducted exceeds the threshold value. Accordingly, it is possible to prevent that the protected program in execution is immediately disabled due to an accidental misoperation by the innocent user. Also, if the malicious user repeats analysis, the number exceeds the threshold value, and the protected program is disabled. Therefore, it is possible to prevent that a protected program in execution is analyzed and secret information thereof is exposed.

Here, the selection unit may select one of the protected programs at random, with reference to the disabled-program list.
With the stated structure the protected program to be selected, that is tobe executed, is determined at random every time. Therefore, it becomes difficult for the malicious user to conduct malicious analysis.
Here, the selection unit may store therein identification information for identifying the selected one of the protected programs, and select one of the protected programs that is not disabled and has not been selected at random with reference to the identification information and the disabled-program list.

With the stated structure, the protected program to be selected, that is to be executed, is determined at random every time. Furthermore, a protected program that has been selected once is never to be selected again. Therefore, it becomes more difficult for the malicious user to conduct malicious analysis.
Here, the selection unit may store therein a prescribed selection order, and select one of the protected programs in accordance with the selection order with reference to the disabled-program list.

With the stated structure, by storing the prescribed selection order, it is possible to shorten the processing time compared to the case of randomly selecting a protected program to be executed, because it is possible to omit processing of the random number generation and so on.
Here, the selection unit may store obfuscation level information showing obfuscation levels of the protected programs, and select one of the protected programs in descending order of the obfuscation levels with reference to the obfuscation level information with reference to the disabled-program list.

With the stated structure, it is possible to effectively prevent malicious analysis by the malicious user, by executing programs in descending order of the obfuscation level, that is, in descending order of analysis difficulty.
Here, the selection unit may store obfuscation level information showing obfuscation levels of the protected programs, and select one of the protected programs in ascending order of the obfuscation levels with reference to the obfuscation level information.

Generally, the higher the obfuscation level of the protected program is, the lower the execution speed of the program is. Therefore, with the stated structure, the protected programs are executed in the descending order of the execution speeds. Accordingly, it is possible to provide a secure processing apparatus with high usability for an innocent user not having intention to conduct malicious analysis.
Here, the selection unit may select one of the protected programs in descending order of execution speeds.

With the stated structure, the protected programs are executed in the descending order of the execution speeds. Accordingly, it is possible to provide a secure processing apparatus with high usability for the innocent user not having an intention to conduct malicious analysis.
Here, the secure processing apparatus may be connected with a program update server that stores therein the protected programs via a network, wherein the selection unit may include a judgment subunit operable to judge whether the number of protected programs that are not disabled is not more than a prescribed threshold value, a program request unit operable to request the program update server for a new protected program, and a program reception unit operable to receive the new protected program from the program update server.

With the stated structure, even if all the plurality of protected programs stored in the program storage unit are disabled, the secure processing apparatus can acquire a new protected program from the program update server. Therefore, it is possible to secure the rights of the innocent user to use the program.
Also, even if the program storage unit has only a small storage capacity and the secure processing apparatus can not prestore many protected programs, it is possible to acquire a protected program from the external program update server.

The present invention also provides a secure processing system that includes a secure processing apparatus and a program update server connected with each other via a network, the secure processing apparatus comprising: a first storage unit that stores a plurality of protected programs that have been generated based on an original program such that execution results of the original program and the protected programs are same; a disabling unit operable to disable one of the protected programs that has been analyzed; a selection unit operable to select one of the protected programs that is not disabled; an execution unit operable to execute the selected one of the protected programs; and a request unit operable to request the program update server for a protected program if the number of protected programs that are not disabled is not more than a prescribed threshold value, and the program update server comprising: a second storage unit that stores a plurality of protected programs; a request reception unit operable to receive a request from the request unit for the protected program, and the transmission unit operable to read one or more of the protected programs from the second storage unit upon reception of the request by the request reception unit, and transmit the read protected programs to the secure processing apparatus.

With the stated structure, it is possible to prevent re-analysis of the same protected program conducted by the malicious user, by disabling the protected program that has been analyzed. Furthermore, since the secure processing apparatus stores the plurality of protected programs, it is possible to secure the rights of the innocent user to use the program by executing another protected program that is not disabled, even if the analyzed protected program is disabled.

Also, even if all the plurality of protected programs stored in the first storage unit are disabled, the secure processing apparatus can acquire a new protected program from the program update server. Therefore, it is possible to secure the rights of the innocent user to use the program.

### Brief Description of the Drawings

FIG. 1 shows the structure of a secure processing system 1;
FIG. 2 is a functional block diagram showing a functional structure of a mobile telephone 10;
FIG. 3 shows a protected program stored in a program storage unit 111;
FIG. 4 explains characteristics of a secure program;
FIG. 5 explains functions of a malicious analysis detection unit 116;
FIG. 6 shows a data structure of a tampering detection value table 410 held in a tampering detection unit 402;
FIG. 7 shows a data structure of a malicious analysis log information set;
FIG. 8 shows a data structure of a disabled-program list 500;
FIG. 9 is a functional block diagram showing a functional structure of a program update server 20;
FIG. 10 shows a protected program stored in an update program storage unit 604;
FIG. 11 is a flowchart showing overall operations of the secure processing system 1;
FIG. 12 is a flowchart showing protected program update processing performed in the secure processing system 1 for updating a protected program;
FIG. 13 is a flowchart showing program selection processing performed in the secure processing system 1;
FIG. 14 is a flowchart showing program selection processing 2 performed in the secure processing system 1; and
FIG. 15 is a flowchart showing processing performed in the secure processing system 1 when a malicious operation is detected.

### Description of Numbering

- 1: Secure processing system
- 10: Mobile telephone
- 20: Program update server
- 30: Network
- 101: Antenna
- 102: Transmission/reception unit
- 103: Communication control unit
- 104: Storage unit
- 105: Display unit
- 106: Operation unit
- 107: Loudspeaker
- 108: Microphone
- 109: Secure processing unit
- 111: Program storage unit
- 112: Execution program selection unit
- 113: Program loading unit
- 114: Program loading area
- 115: Program execution unit
- 116: Malicious analysis detection unit
- 117: Disabled-program list storage unit
- 118: Disabled-program list update unit
- 401: Debugger detection unit
- 402: Tampering detection unit
- 403: Malicious analysis notification unit
- 601: Transmission/reception unit
- 602: Control unit
- 603: Malicious analysis log storage unit
- 604: Update program storage unit

### Best Mode for Carrying Out the Invention

The following describes a secure processing system 1 as a preferred embodiment of the present invention with reference the drawings.

### <Structure>

### 1. Secure processing system 1

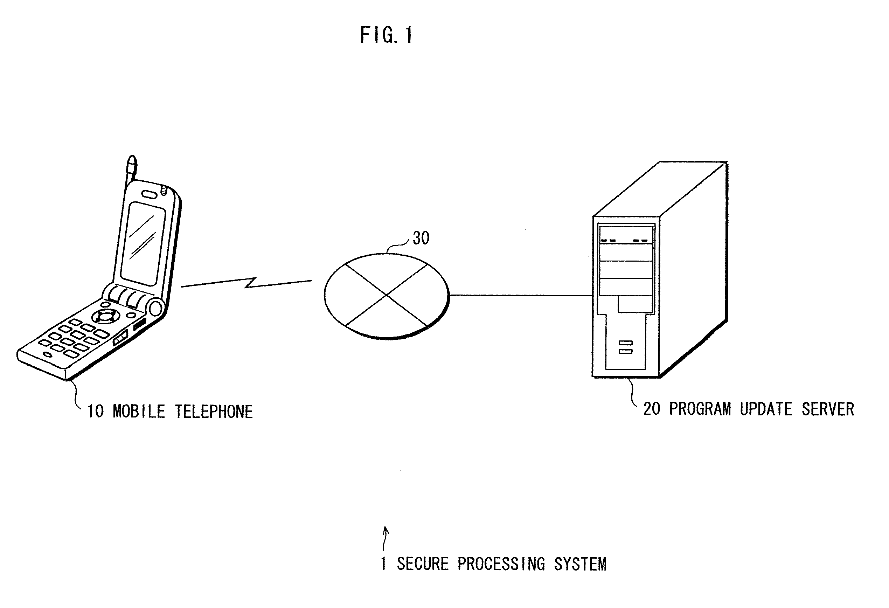

FIG. 1 shows the structure of the secure processing system 1. As FIG. 1 shows, the secure processing system 1 includes a mobile telephone 10, a program update server 20, and a network 30.

The mobile telephone 10 is a portable type telephone which communicates using radio waves. The mobile telephone 10 downloads encrypted contents and holds the downloaded encrypted contents. Moreover, the mobile telephone 10 holds the encrypted-contents decryption program for decrypting and playing back the encrypted contents. Here, the encrypted contents held in the mobile telephone 10 have been generated by applying an encryption algorithm E to music contents.

The program update server 20 is connected to the mobile telephone 10 via the network 30. The program update server 20 updates the encrypted-contents decryption program used by the mobile telephone 10 to decrypt the encrypted contents.
Here, the network 30 is specifically the Internet, for example. In FIG. 1, the mobile telephone network, the radio base stations, and the likes are omitted.

### 2. Mobile telephone 10

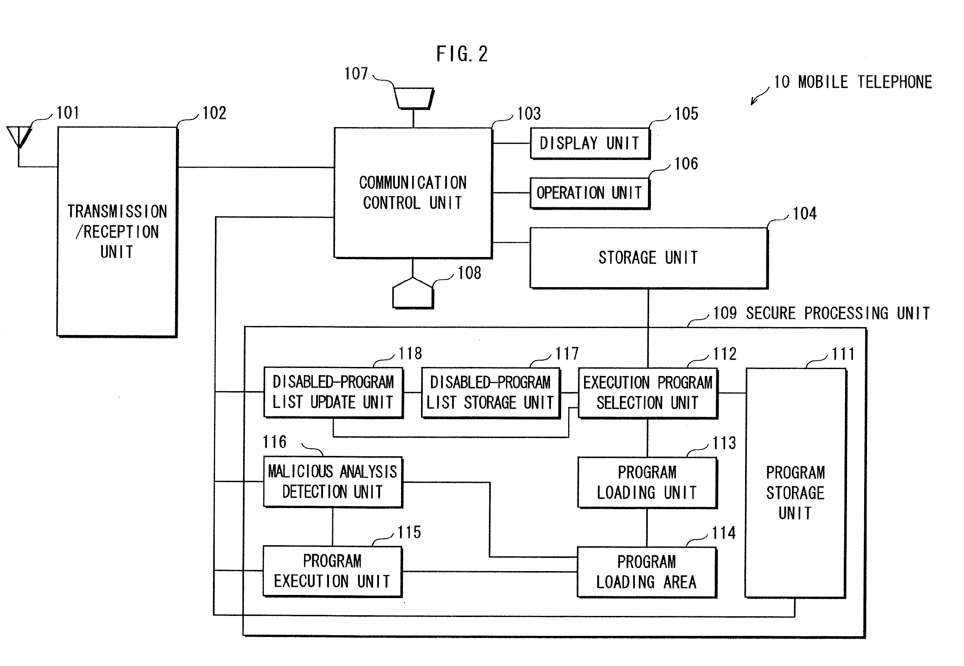

FIG. 2 is a functional block diagram showing a functional structure of the mobile telephone 10. As FIG. 2 shows, the mobile telephone 10 includes an antenna 101, a transmission/reception unit 102, a communication control unit 103, a storage unit 104, a display unit 105, a control unit 106, a loudspeaker 107, a microphone 108, and a secure processing unit 109. Here, the antenna 101, the transmission/reception unit 102, the communication control unit 103, the storage unit 104, the display unit 105, the control unit 106, the loudspeaker 107, and the microphone 108 are functional blocks for achieving common functions of mobile telephones. The secure processing unit 109 is the characteristic function block of the present invention. Note that the mobile telephone 10 is specifically a computer system structures with a microprocessor, a ROM, a RAM, and so on.

The transmission/reception unit 102 realizes functions such as telephone calls, transmission/reception of e-mails, and communications with the program update server 20 via the network 30.
The communication control unit 103 stores a computer program for communication control. The functions such as the telephone calls, the transmission/reception of e-mails, and the network connection are realized by the microprocessor executing the computer program for communication control.

The storage unit 104 stores a telephone directory, a schedule book, e-mails that has been received or transmitted, downloaded encrypted contents, etc.
The display unit 105 includes a liquid crystal display, and displays various screens on the liquid crystal display.
The operation unit 106 is structured with a plurality of buttons and so on. The buttons are provided on an operation panel of the mobile telephone 10. The operation unit 106 receives instructions from a user pressing the buttons.

The loudspeaker 107 outputs a sound. The microphone 108 receives an audio input.
The secure processing unit 109 includes a program storage unit 111, an execution program selection unit 112, a program loading unit 113, a program loading area 114, a program execution unit 115, a malicious analysis detection unit 116, a disabled-program list storage unit 117, and a disabled-program list update unit 118.

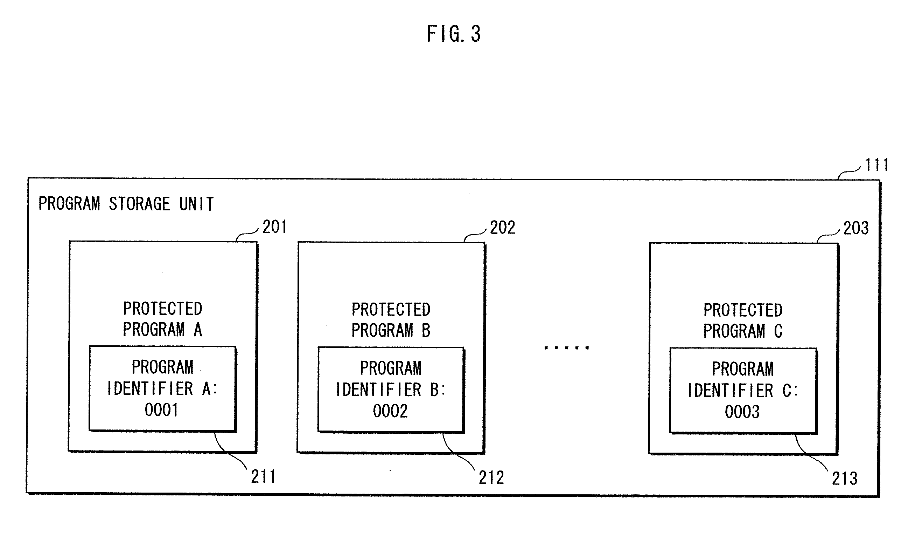

The program storage unit 111 includes a FlashROM, an EEPROM, or a HDD. FIG. 3 shows the inside of the program storage unit 111. As FIG. 3 shows, the program storage unit 111 stores a plurality of protected programs, including a protected program A (201), a protected program B (202) ... and a protected program C (203).
Each protected program is given a program identifier. Specifically, the protected program A (201) is given a program identifier A:0001 (211), the protected program B (202) is given a program identifier B:0002 (212), and the protected program C (203) is given a program identifier C:0003 (213).

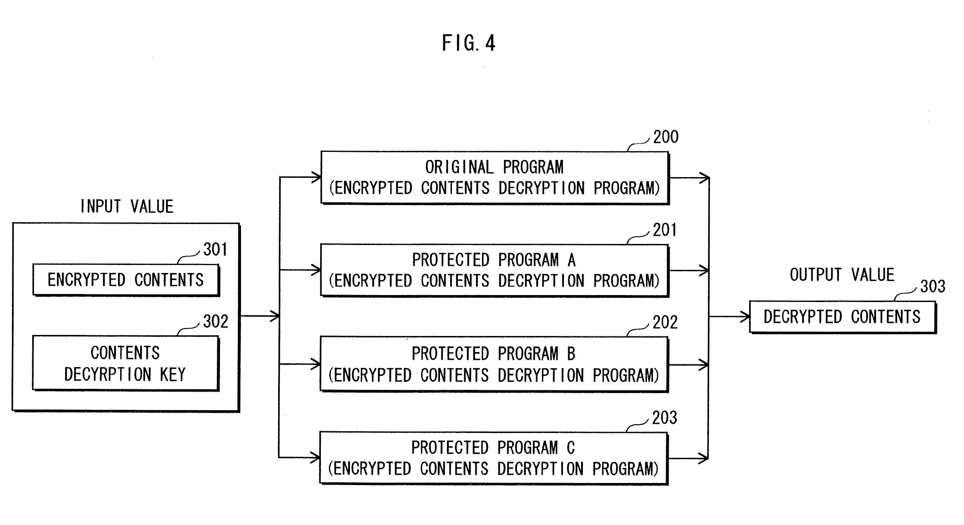

Here, characteristics of the protected programs are described below with reference to FIG. 4.
All the protected programs stored in the program storage unit 111 have been generated by obfuscating an original program 200 as the encrypted-contents decryption program. As FIG. 4 shows, if encrypted contents 301 and a decryption key 302 are input values, the original program 200 and the protected programs output the same value, namely decrypted contents 303. Note that each protected program of this embodiment includes therein the decryption key 302.

Here, obfuscation is a method for complicating a program without changing the structural meaning of the program so that analysis of the program becomes difficult. The following specific examples of the obfuscation: encryption of part or all of the original program 200; insertion of a dummy code, which is unnecessary and does not affect the execution of the program, into the original program 200; replacement of a part of codes included in the original program 200 with an equivalent code that is different from the part of the codes but results in the same; division of a module into a plurality of modules; and complication of a control structure of the program.
Each protected program has a different binary code for the following reasons: a different obfuscation method is applied to each; a plurality of obfuscation methods are differently combined and applied to each; a different algorithm or a different encryption key is used for each; different part of the original program 200 is encrypted for each; and a level of obfuscation is different for each. The level of obfuscation can be changed by changing the size of the added dummy code, the complication pattern of the control structure, the number of divisions of the modules, the strength of the encryption algorithm, and so on.

The execution program selection unit 112 refers to a disabled-program list 500 to select one of the protected programs that is not disabled. The execution program selection unit 112 reads the program initial address and the program size of the selected protected program from the disabled-program list, and notifies the program loading unit 113 of the read program initial address and the program size. Note that the execution program selection unit 112 generates a random number using a random number generator, and selects one of the protected programs based on the generated random number. The selection of the protected program is described later in detail.

Here, if it is judged based on the reference to the disabled-program list 500 that all the protected programs are disabled, the execution program selection unit 112 requests the disabled-program list update unit 118 to download new protected program.
Upon receiving the program initial address and the program size from the execution program selection unit 112, the program loading unit 113 loads the protected program into the program loading area 11 4 . The program loading area 114 in this embodiment is specifically a RAM, for example.

The program execution unit 115 includes a microprocessor, and executes the protected program loaded into the program loading area 114.
As described above, the protected program is encrypted-contents decryption program. Therefore, the program execution unit 115 executes the protected program to read encrypted contents from the storage unit 104, and apply a decryption algorithm D to the read encrypted contents using the decryption key to decrypt the music contents. The program execution unit 114 outputs the decrypted music contents to the loudspeaker 107 via the communication control unit 103. Here, the decryption algorithm D is an algorithm for converting a cipher text, encrypted with use of the encryption algorithm E, to a plain text.

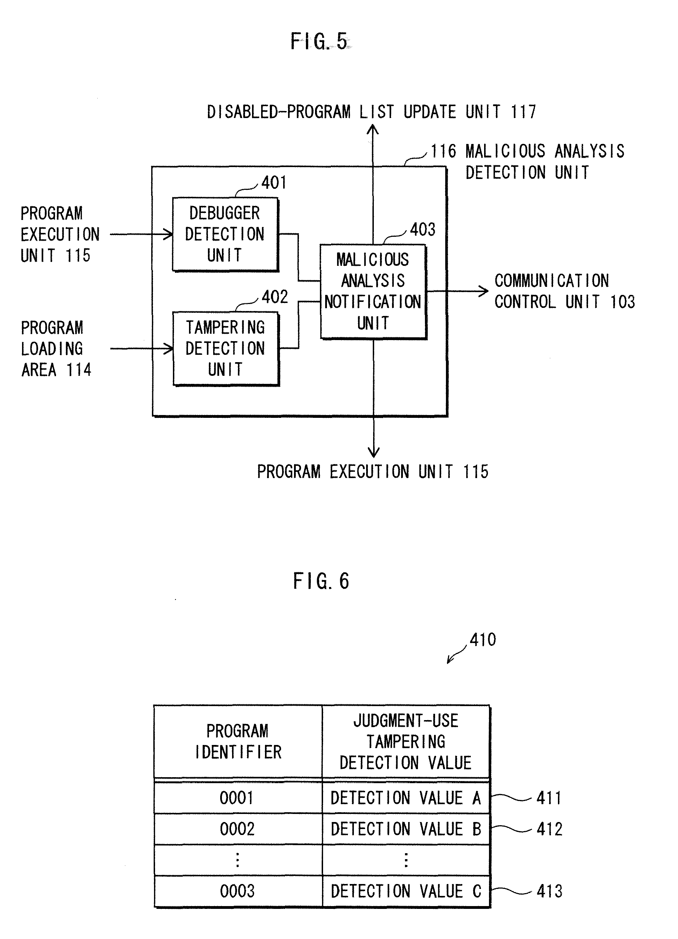

As FIG. 5 shows, the malicious analysis detection unit 116 includes a debugger detection unit 401, a tampering detection unit 402 and a malicious analysis notification unit 403.
The debugger detection unit 401 has a function of detecting an in-circuit emulator (TM) and a software debugger while the program execution unit 115 executes the protected program. Upon detection of a debugger, the debugger detection unit 401 disables the debugger by disconnecting the debugger interface for example. Upon disabling the debugger, the debugger detection unit 401 notifies the malicious analysis detection notification unit 403 of the detection of the malicious analysis.

The tampering detection unit 402 prestores a tampering detection value table 410 shown in FIG. 6. The tampering detection value table 410 includes tampering detection value information sets 411, 412 ... and 413. Each tampering detection value information set includes a program identifier and a judgement-use tampering detection value. The program identifier is information for uniquely identifying the protected program. The judgement-use tampering detection value is a value previously calculated by applying a one-way function to the protected program that is identified by the program identifier associated with the judgment-use tampering detection value. The judgment-use tampering detection value is used for judging whether tampering has been performed.

Here, regarding all the protectedprograms stored in the program storage unit 111, the tampering detection value table 410 stores the tampering detection value information sets associated in one-to-one with the protected programs.
Specifically, the tampering detection value information set 411 includes a program identifier "0001" and a judgment-use tampering detection value "detection value A". Since the program identifier "0001" is associated with the protected program A (201), the judgment-use tampering detection value "detection value A" is used for judging whether the protected program A (201) has been tampered or not.

The tampering detection value information set 412 includes a program identifier "0002" and a judgment-use tampering detection value "detection value B". Since the program identifier "0002" is associated with the protected program B (202), the judgment-use tampering detection value "detection value B" is used for judging whether the protected program B (202) has been tampered or not.
The tampering detection value information set 413 includes a program identifier "0003" and a judgment-use tampering detection value "detection value C". Since the program identifier "0003" is associated with the protected program C (203), the judgment-use tampering detection value "detection value C" is used for judging whether the protected program C (203) has been tampered or not.

Along with download of a new protected program, the tampering detection unit 402 receives a judgment-use tampering detection value and a program identifier from the disabled-program list update unit 118, and newly enters them into the tampering detection value table 410.
When the protected program is loaded into the program loading area 114, the tampering detection unit 402 calculates the tampering detection value by applying the one-way function to the loaded protected program. The tampering detection unit 402 judges whether the calculated tampering detection value matches with the judgment-use tampering detection value described in the tampering detection value table 410. If the calculated tampering detection value matches with the judgment-use tampering detection value, it is to be judged that the protected program loaded in to the program loading area 114 has not been tampered. If the calculated tampering detection value does not match with the judgment-use tampering detection value, it is to be judged that the protected program loaded in to the program loading area 114 has been tampered. If detecting tampering with the protected program, the tampering detection unit 402 notifies the malicious analysis notification unit 403 of the detection of the malicious analysis. Note that the judgment-use tampering detection value and the tampering detection value are calculated using SHA (Secure Hash Algorithm) -1, for example.

Upon receiving a notification of detection of malicious analysis from the debugger detection unit 401 or the tampering detection unit 402, the malicious analysis notification unit 403 instructs the program execution unit 115 to stop execution of the program, and generates a malicious analysis log information set. The malicious analysis notification unit 403 transmits the generated malicious analysis log information set to the program update server 20 via the communication control unit 103, the transmission/reception unit 102, the antenna 101 and the network 30.

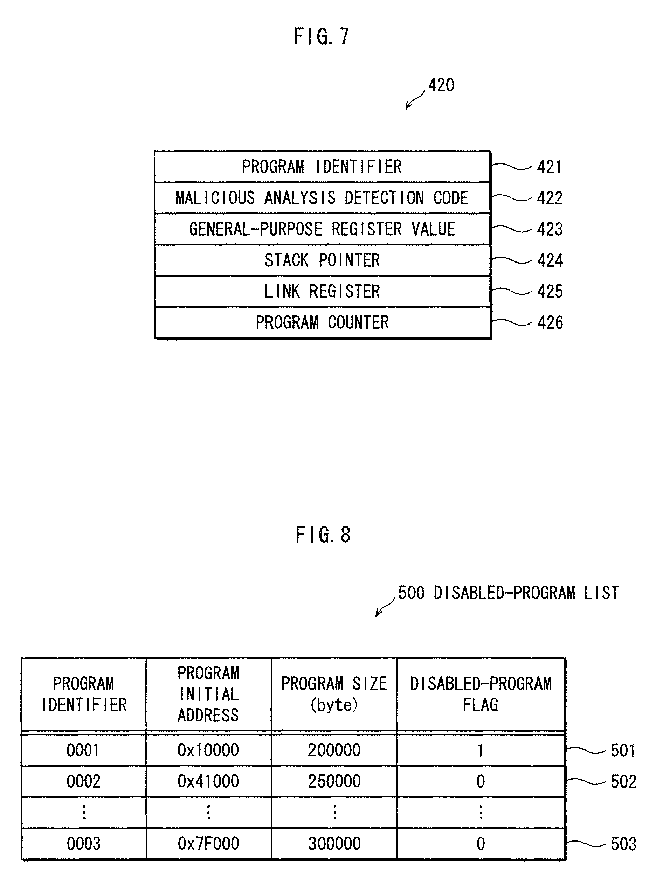

FIG. 7 shows a data structure of the malicious analysis log information set 420 generated by the malicious analysis notification unit 403. As FIG. 7 shows, the malicious analysis log information set 420 includes a program identifier field 421, a malicious analysis detection code field 422, a general-purpose register value field 423, a stack pointer field 424, a link register field 425, and a program counter field 426.
The program identifier field 421 describes a program identifier that identifies a protected program that has been executed by the program execution unit 115 when the malicious analysis is detected. The malicious analysis detection code field 422 describes a malicious analysis detection code that indicates one between the debugger detection unit 401 and the tampering detection unit 402 whichever has detected the malicious analysis. If the debugger detection unit 401 has detected a debugger, the malicious analysis detection code is "1", and if the tampering detection unit 402 has detected tampering, the malicious analysis detection code is "2". The general-purpose register value field423, the stack pointer field 424, the link register field 425, and the program counter field 426 describes values of resister files included inside the microprocessor at the time of the detection of the debugger.

Note that in the case where a processor having a debug register is used, the malicious analysis notification unit 403 may write a value indicating a status of the debug register, an address value that is set in the debug register, and the likes into the malicious analysis log information set.
The disabled-program list storage unit 117 holds therein a disabled-program list 500 shown in FIG. 8. The disabled-program list 500 includes a plurality of disabled-program information sets. Each disabled-program information set includes a program identifier, a program initial address, a program size, and a disabled-program flag.

The program identifier is information for uniquely identifying the protected program. The program initial address indicates a recording start position in the program storage unit 111, of the corresponding protected program. The program size represents the data size of the protected program. The disabled-program flag indicates, by a value "0" or "1", whether the corresponding protected program is disabled or not. The value "0" indicates that the protected program is not disabled, and the value "1" indicates that the protected program is disabled.

Here, regarding all the protected programs stored in the program storage unit 111, the disabled-program list 500 stores the disabled-program information sets associated in one-to-one with the protected programs. Specifically, the disabled-program information set 501 corresponds to the protected program A (201), the disabled-program information set 502 corresponds to the protected program B (202), and the disabled-program information set 503 corresponds to the protected program C (203).

Upon receiving a request for downloading a protected program from the execution program selection unit 112, the disabled-program list update unit 118 transmits the received request to the program update server 20 via the communication control unit 103, the transmission/reception unit 102, the antenna 101 and the network 30. The disabled-program list update unit 118 receives a protected program and a judgment-use tampering detection value transmitted by the program update server 20 in response to the request, via the network 30, the antenna 101, the transmission/reception unit 102 and the communication control unit 103. The disabled-program list update unit 118 writes the received protected program into the program storage unit 11, and outputs the received judgement-use tampering detection value and a program identifier for identifying the protected program to the tampering detection unit 402 of the malicious analysis detection unit 116.

Also, in the following cases, the disabled-program list update unit 118 updates the disabled-program list 500 stored in the disabled-program list storage unit 117:
(a) The case where malicious analysis of the protected program is detected. In other words, if receiving a program identifier of a protected program, from which malicious analysis is detected, from the malicious analysis notification unit 403, the disabled-program list update unit 118 updates the disabled-program list 500 by replacing the disabled-program flag "0", associated with the received program identifier, with "1".

(b) The case of receiving a new protected program from the program update server 20. In other words, if receiving the protected program and the judgment-use tampering detection value from the program update server 20, the disabled-program list update unit 118 generates a disabled-program information set relating to the received protected program, and enters the generated disabled-program information set into the disabled-program list 500.

### 3. Program update server 20

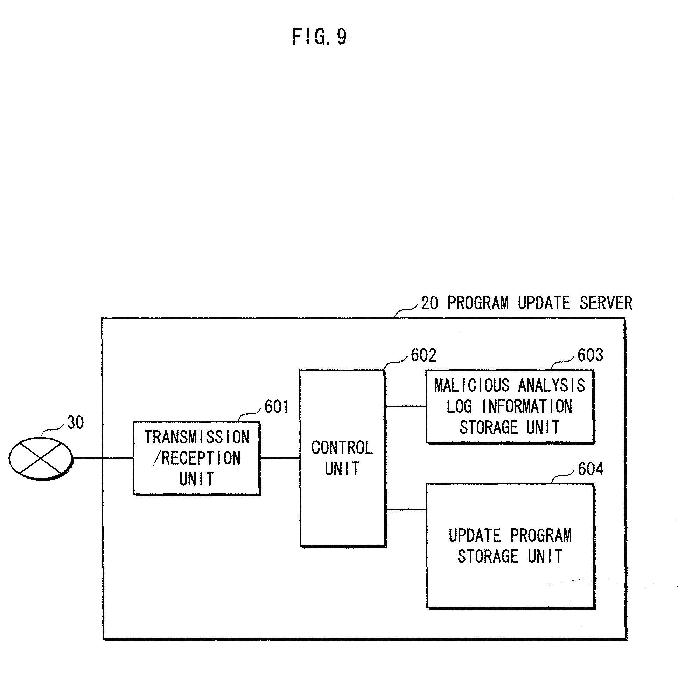

FIG. 9 is a functional block diagram showing a functional structure of the program update server 20. As FIG. 9 shows, the program update server 20 includes a transmission/reception unit 601 a control unit 602, a malicious analysis log information storage unit 603, and an update program storage unit 604. The program update server 20 is, specifically, a computer system structured with a microprocessor, a ROM, a RAM a hard disk unit, and so on.

The transmission/reception unit 601 is a network connection unit. The transmission/reception unit 601 receives information transmitted by the mobile telephone 10 via the network 30, and outputs the received information to the control unit 602. The transmission/reception unit 601 also receives information output by the control unit 602, and transmits the received information to the mobile telephone 10 via the network 30.
The control unit 602 controls whole the program update server 20. Specifically, upon receiving a request for downloading a protected program from the mobile telephone 10 via the transmission/reception unit 601 and the network 30, the control unit 602 reads the protected program and the judgment-use tampering detection value from the update program storage unit 604, and outputs the read protected program and judgment-use tampering detection value to the transmission/reception unit 601. Also, upon receiving a malicious analysis log information set from the mobile telephone 10 via the transmission/reception unit 601 and the network 30, the control unit 602 writes the received malicious analysis log information set into the malicious analysis log information storage unit 603.

The malicious analysis log information storage unit 604 stores therein the malicious analysis log information set received from the mobile telephone 10.

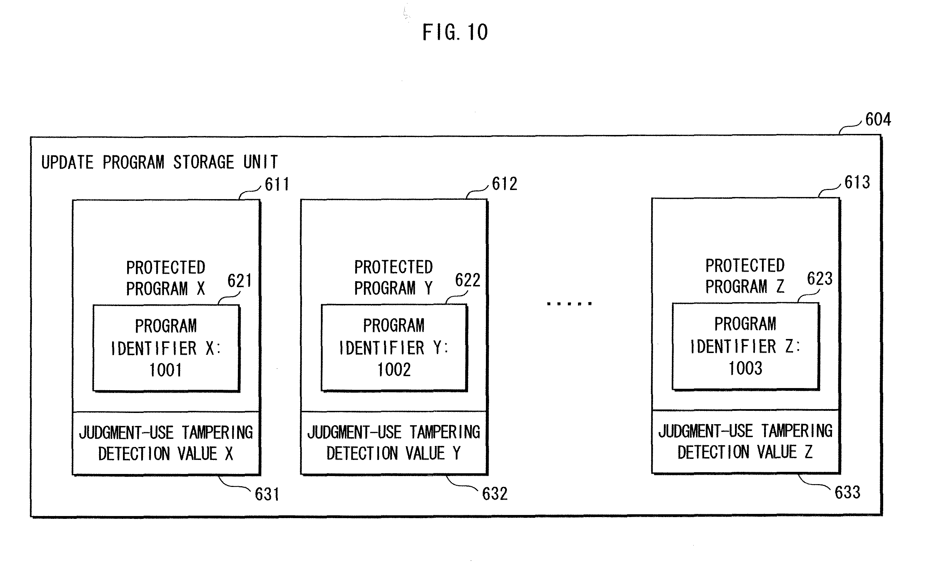

FIG. 10 shows the inside of the update program storage unit 604. As FIG. 10 shows, the update program storage unit 604 stores therein a plurality of protected programs, including a protected program X (611), a protected program Y (612) ... and a protected program Z (613).

Each protected program is given a program identifier. Specifically, the protected program X (611) is given a program identifier X: 1001 (621), the protected program Y (612) is given a program identifier Y: 1002 (622), and the protected program Z (613) is given a program identifier Z: 1003 (623).
Note that each protected program stored in the update program storage unit 604 is a program generated by obfuscating the original program 200 in the same manner as the protected program stored in the program storage unit 111 of the mobile telephone 10. Each protected program has a different binary code and the characteristics shown in FIG. 4. In other words, if the encrypted contents 301 and the contents decryption key 302 are input values, the protected program X (611), the protected program Y (612) and the protected program Z (613) output the same value, namely the decrypted contents 303.

Also, the update program storage unit 604 stores judgment-use tampering detection values in association with the protected programs . As FIG. 10 shows, the protected program X (611) corresponds to the judgment-use tampering detection value X (631), the protected program Y (612) corresponds to the judgment-use tampering detection value Y (632), and the protected program Z (613) corresponds to the judgment-use tampering detection value Z (633). Each judgement-use detection value is a value previously calculated by applying a one-way function to the corresponding protected program, and used for judging whether the corresponding protected program has been tampered or not.

### <Operations>

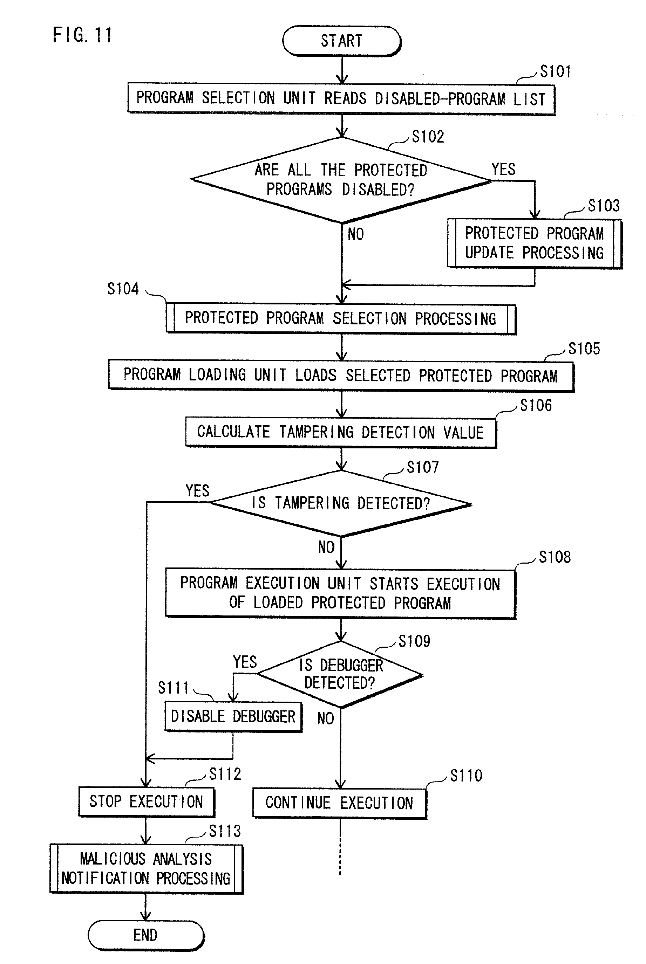

The following describes operations of the secure processing system 1, with reference to flowcharts shown in FIG. 11 to FIG. 15.

### 1. Overall Operations of Secure Processing System 1

FIG. 11 is a flowchart showing overall operations of the secure processing system 1. Note that the operations shown in FIG. 11 are triggered by a request for decrypting the encrypted contents generated in the mobile telephone 10.

The execution program selection unit 112 of the mobile telephone 10 reads the disabled-program list 500 stored in the disabled-program list storage unit 117 (Step S101) . The Execution program selection unit 112 reads the disabled-program flags of the disabled-program list 500, and judges whether all the protected programs stored in the program storage unit 111 are disabled or not (Step S102).

If all the protected programs are disabled (YES in Step S102), in other words, if all the disabled-program flags of the disabled-program list 500 are "1", the mobile telephone 10 updates the protected programs (Step S103). If any of the protected programs is not disabled, in other words, if any of he disabled-program flag of the disabled-programlist 500 is "0" (NO in Step S102), the execution program selection unit 112 executes protected program selection processing to select one of the protected programs (Step S104).

Next, the program loading unit 113 loads the protected program selected in Step S104 from the program storage unit 111 into the program loading area 114 (Step S105).
Next, the tampering detection unit 402 of the malicious analysis detection unit 116 calculates the tampering detection value of the protected program loaded into the program loading area 114 (Step S106). If tampering with the protected program is detected (YES in Step S107), in other words, if the tampering detection value calculated in Step S106 does not match with the judgment-use tampering detection value that has been previously stored, Step S112 is executed next.

If tampering with the protected program is not detected (NO in Step S107), in other words, if the tampering detection value calculated in Step S106 matches with the judgment-use tampering detection value that has been previously stored, the program execution unit 115 starts execution of the protected program loaded in Step S105 (Step S108) .
If no debugger is detected by the debugger detection unit 401 of the malicious analysis detection unit 116 during the execution of the protected program (NO in Step S109), the program execution unit 115 continues the execution of the protected program.

If any debugger is detected by the debugger detection unit 401 during the execution of the protected program (YES in Step S109), the debugger detection unit 401 disables the debugger (Step S111), and then the Step S112 is executed.
The tampering detection unit 402 that has detected the tampering and the debugger detection unit 401 that has detected the debugger notifies the malicious analysis notification unit 403 of the detection, and the malicious analysis notification unit 403 instructs the program execution unit 115 to stop the execution. After that, the program execution unit 115 stops the execution of the protected program that the program execution unit 115 has been executing (Step S112).

The malicious analysis notification unit 403 performs malicious analysis notification processing (Step S113), and the mobile telephone 10 finishes the processing.

### 2. Operations for Updating Protected Program

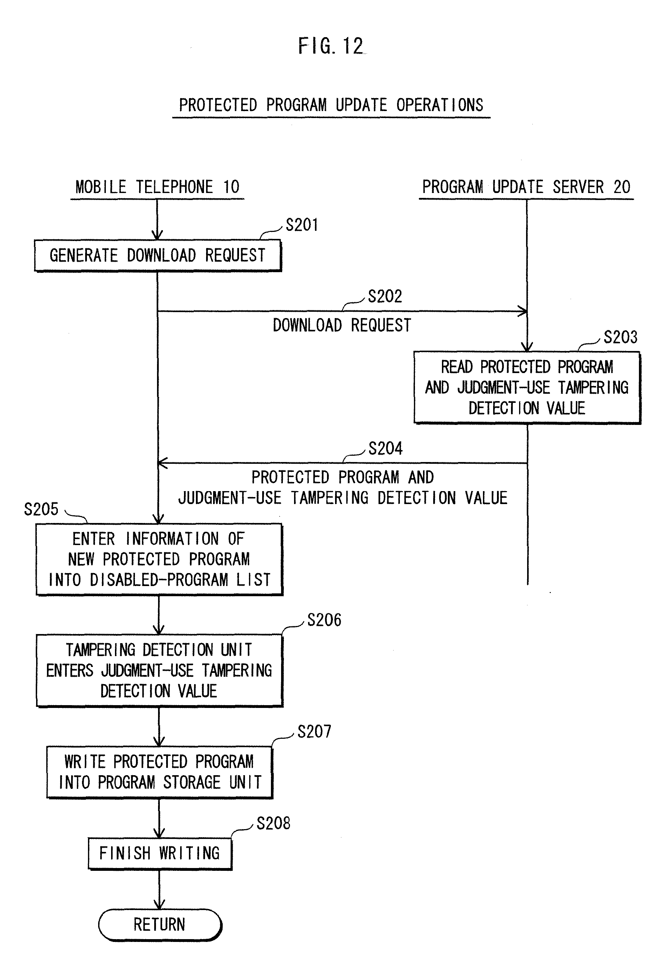

FIG. 12 is a flowchart showing operations for updating the protected program. Note that the operations shown in FIG. 12 are the detail of Step S103 of the flowchart shown in FIG. 11.

The execution program selection unit 112 of the mobile telephone 10 generates a download request for requesting download of a new protected program (Step S201). The execution program selection unit 112 outputs the generated download request to the disabled-program list update unit 118. The disabled-program list update unit 118 transmits the download request to the program update server 20 via the disabled-program list update unit 118, the communication control unit 103, the transmission/reception unit 102, the antenna 101 and the network 30. The transmission/reception unit 601 of the program update server 20 receives the download request (Step S202).

Upon receiving the download request form the transmission/reception unit 601, the control unit 602 of the program update server 20 reads the protected program and the judgment-use tampering detection value from the update program storage unit 604 (Step S203) . The control unit 602 outputs the read protected program and judgment-use tampering detection value to the transmission/reception unit 601.
The transmission/reception unit 601 outputs the protected program and the judgment-use tampering detection value to the mobile telephone 10 via the network 30. The transmission/reception unit 102 of the mobile telephone 10 receives the protected program and the judgment-use tampering detection value via the antenna 101 (Step S204).

The disabled-program list update unit 118 generates a disabled-program information set relating to the protected program received in Step S204, and enters the generated disabled-program information set into the disabled-program list 500 stored in the disabled-program list storage unit 117 (Step S205).
Next, the disabled-program list update unit 118 outputs the judgment-use tampering detection value received in Step S204 and the program identifier to the tampering detection unit 402 of the malicious analysis detection unit 116. The tampering detection unit 402 enters the judgment-use tampering detection value into the tampering detection value table 410 in association with the program identifier (Step S206).

Furthermore, the disabled-program list update unit 118 writes the protected program received in Step S204 into the program storage unit 111 (Step S207). When the disabled-program list update unit 118 finishes the writing (Step S208), Step S104 in FIG. 11 and later are executed.

### 3. Operations for Program Selection 1

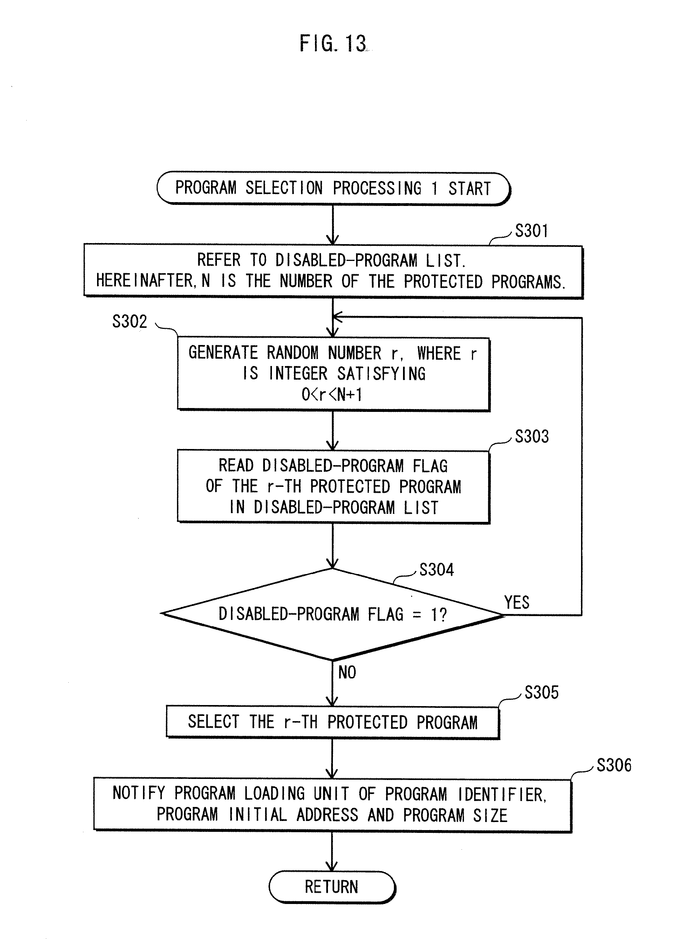

FIG. 13 is a flowchart showing operations for program selection processing 1. Note that the operations shown in FIG. 13 are the detail of Step S104 of the flowchart shown in FIG. 11.

The execution program selection unit 112 refers to the disabled-program list 500 stored in the disabled-program list storage unit 117. Hereinafter, N shows the number of the disabled-program information sets included in the disabled-program list 500, which is the number of the protected programs stored in the program storage unit 111 (Step S301).
Next, the execution program selection unit 112 generates a random number r using the random number generator, where r is an integer within a range from 1 to N (Step S302) . The execution program selection unit 112 reads the disabled-program flag of the r^{th} disabled-program information set from the top of the disabled-program list 500, among the N disabled-program information sets included in the disabled-program list 500 (Step S303).

If the disabled-program flag is 1 (YES in Step S304), the corresponding protected program is disabled. Therefore, the execution program selection unit 112 can not select this protected program. Accordingly, the execution program selection unit 112 goes back to Step S302 and continues processing for selecting another protected program.
If the disabled-program flag is 0 (NO in Step S304), the corresponding protected program is not disabled. Accordingly, the execution program selection unit 112 selects the r^{th} protected program (Step S305). The execution program selection unit 112 reads the program identifier, the program initial address and the program size that correspond to the selected protected program from the disabled-program list 500, and notifies the program loading unit 113 of the read program identifier, program initial address and program size (Step S306). And then, Step S105 in FIG. 11 is executed to continue the processing.

Note that the processing for selecting the protected program performed by the execution program section unit 112 is not limited to the method above. The following method may be used.

### 4. Operations for Program Selection 2

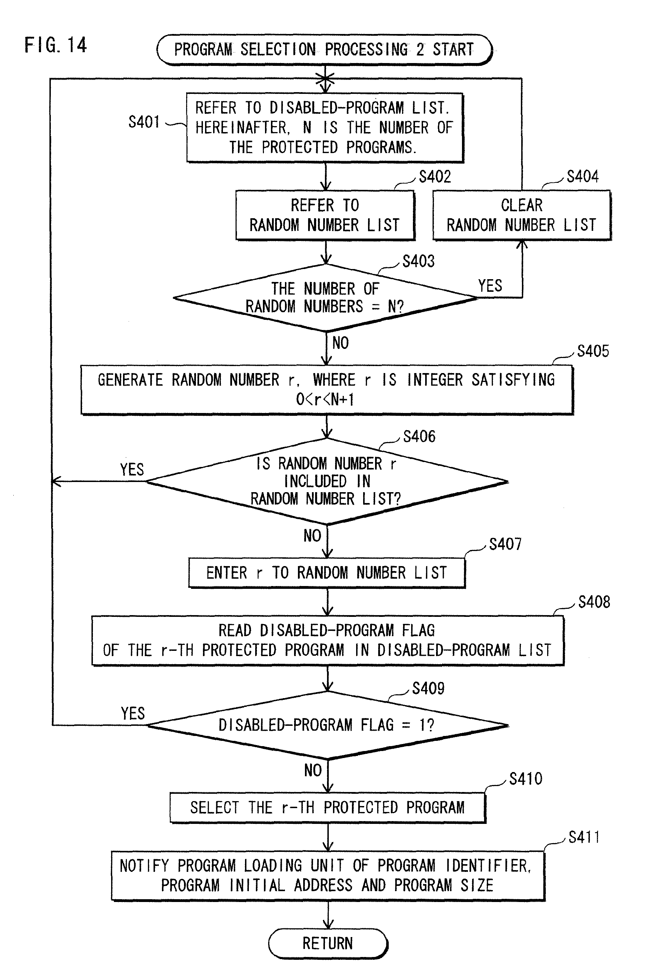

The following describes operations for the program selection processing 2, with reference to the flowchart shown in FIG. 14. The program selection processing 2 is a modification example of the program selection processing 1 described above, and is the detail of Step S104 of the flowchart shown in FIG. 11.
The execution program selection unit 112 refers to the disabled-program list 500 stored in the disabled-program list storage unit 117. Hereinafter, N shows the number of the disabled-program information sets included in the disabled-program list 500, which is the number of the protected programs stored in the program storage unit 111 (Step S401).
Here, the execution program selection unit 112 stores therein a random number list. The random number list is a list of random numbers already generated by the random number generator. The execution program selection unit 112 refers to the random number list (Step S402) to count the number of the random numbers included in the randomnumber list. If the number of the randomnumbers included in the random number list is N (YES in Step S403), the execution program selection unit 112 clears the random number list stored therein (Step S404).
If the number of the random numbers is less than N (NO in Step S403), the execution program selection unit 112 generates a random number r using the random number generator, where r is an integer within a range from 1 to N (Step S405). Theexecutionprogramselection unit 112 judges whether the random number r generated in Step S405 is already included in the random number list.
If the random number r is included in the random number list (YES in Step S406), the execution program selection unit 112 returns to Step S401 to continue the processing. If the random number r is not included in the random number list (NO in Step S406), the execution program selection unit 112 enters the random number r generated in the step S405 into the random number list (Step S407).
Next, the execution program selection unit 112 reads the disabled-program flag of the r^{th} disabled-program information set from the top of the disabled-program list 500, among the N disabled-program information sets included in the disabled-program list 500 (Step S408).

If the disabled-program flag is 1 (YES in Step S409), the corresponding protected program is disabled. Therefore, the execution program selection unit 112 can not select this protected program. Accordingly, the execution program selection unit 112 goes back to Step S401 and continues the processing.
If the disabled-program flag is 0 (NO in Step S409), the corresponding protected program is not disabled. Accordingly, the execution program selection unit 112 selects the r^{th} protected program (Step S410). The execution program selection unit 112 reads the program identifier, the program initial address and the program size that correspond to the selected protected program from the disabled-program list 500, and notifies the program loading unit 113 of the read program identifier, program initial address and program size (StepS411) . And then, Step S105 in FIG. 11 is executed to continue the processing.

### 5. Operations for Malicious Analysis Notification

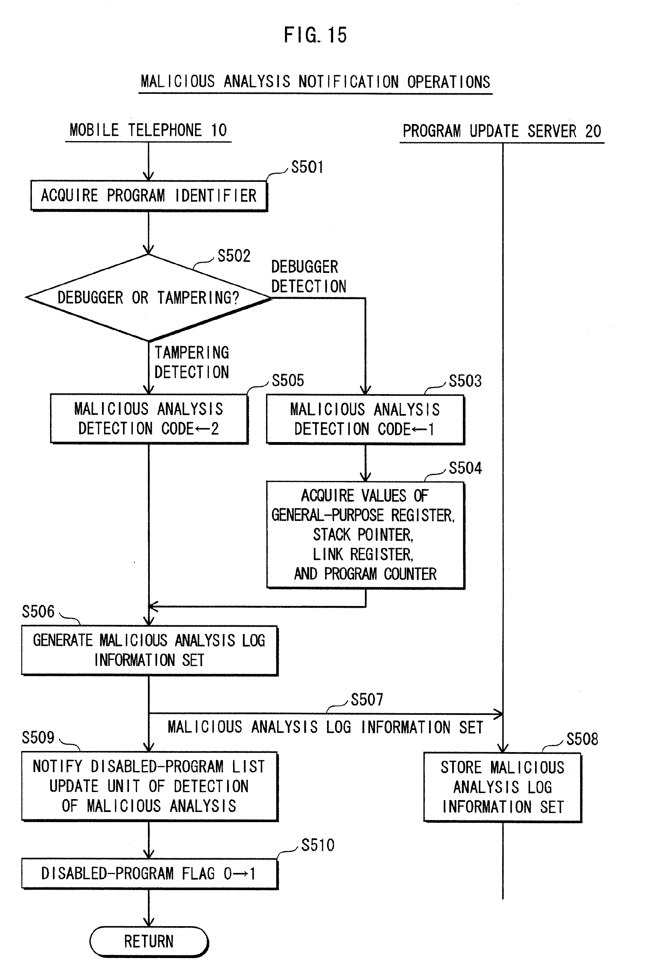

The following describes operations for the malicious analysis notification, with reference to the flowchart shown in FIG. 15. Note that the operations explained here is the detail of Step S113 shown in FIG. 11.
Via the program execution unit 115, the malicious analysis notification unit 403 acquires the program identifier of the protected program that has been loaded into the program loading area 114 (Step S501).

Next, the malicious analysis notification unit 403 judges which between the debugger detection unit 401 and the tampering detection unit 402 has detected the malicious analysis.
If it is the debugger detection unit 401 that has detected the malicious analysis ("debugger detection" in Step S502), the malicious analysis notification unit 403 sets 1 to the malicious analysis detection code (Step S503). After that, the malicious analysis notification unit 403 acquires values of the general-purpose resister, the stack pointer, the link register, and the program counter from the resister files included in the program execution unit 115 (Step S504).

If it is the tampering detection unit 402 that has detected the malicious analysis ("tampering detection" in Step S502), the malicious analysis notification unit 403 sets 2 to the malicious analysis detection code (Step S505).
The malicious analysis notification unit 403 describes the acquired program identifier in the program identifier field 421 of the malicious analysis log information set 420, and describes the malicious analysis detection code, to which "1" or "2" has been set, in the malicious analysis detection code field 422. Next, if the malicious analysis notification unit 403 has acquired the values of the general-purpose resister, the stack pointer, the link register, and the program counter from the resister files, the malicious analysis notification unit 403 describes the values in the general-purpose register value field423, the stack pointer field 424, the link register field 425, and the program counter field 426 of the malicious analysis log information set 420 to generate the malicious analysis log information set 420 (Step S506).

The malicious analysis notification unit 403 transmits the generated malicious analysis log information set 420 to the program update server 20 via the communication control unit 103, the transmission/reception unit 102, the antenna 101, and the network 30. The program updateserver20 receives the malicious analysis log information set 420 (Step S507).
Upon receiving the malicious analysis log information set 420 from the transmission/reception unit 601, the control unit 602 of the program update server 20 writes the received malicious analysis log information set 420 into the malicious analysis log information storage unit 603. The malicious analysis log information storage unit 603 stores therein the malicious analysis log information set 420 (Step S508).

Meanwhile, the malicious analysis notification unit 403 of the mobile telephone 10 notifies the disabled-program list update unit 118 of the detection of the malicious analysis together with the program identifier acquired in Step S501 (Step S509). Upon receiving the notification of the detection of the malicious analysis, the disabled-program list update unit 118 sets "1" to the disabled-program flag of the disabled-program information set identified by the received identifier (Step S510). After that, the processing returns to the flowchart of FIG. 11.

### <Other Modification Examples>

(1) The protected programs of the present invention may be generated by obfuscating the whole body of the original program, or may be generated by obfuscating part of the original program.
(2) In the above-described embodiment, the program storage unit 111 of the mobile telephone 10 has a structure for storing a plurality of protected programs each having a different binary code. However, according to the present invention, the program storage unit 111 does not necessarily store the protected programs as binary codes. For example, the program storage unit 111 may store the protected programs as source programs that have been obfuscated in different manners. If this is the case, the program execution unit 115 may have a structure to execute each protected program using an interpreter.

(3) In the above-described embodiment, the tampering detection unit 402 of the mobile telephone 10 has a structure for detecting tampering by using one-way function. However, as the matter of course, the method used for detecting tempering is not limited to the one-way function. For example, the tampering detection unit 402 may previously store encrypted protected programs generated by encrypting the protected programs, and detect tampering by comparing the result of applying the same encryption to the protected program selected by the execution program selection unit 112 and the encryptedprotec ted program previously stored therein.

(4) In the above-described embodiment, the execution program selection unit 112 of the mobile telephone 10 has a structure of selecting one of the protected programs that has not been disabled by performing the program selection 1 shown in FIG. 13 or the program selection 2 shown in FIG. 14. However, the way of selecting one of the protected programs in the present invention is not limited to this. For example, followings are also included in the present invention.

(a) The execution program selection unit 112 may store a prescribed selection order, and select the protected program to be executed in accordance with the selection order.
   Specifically, the execution program selection unit 112 stores the program identifiers that are arranged in accordance with the selection order. If a request for decrypting the encrypted contents occurs, the execution program selection unit 112 reads the program identifier that is at the top of the selection order. Next, the execution program selection unit 112 reads the disabled-program list 500 from the disabled-program list storage unit 117, and judges whether the protected program identified by the program iden ti f ier read before is disabled or not. If the protected program is not disabled, the execution program selection unit 112 selects the protected program, and notifies the program loading unit 113 of the program initial address and the program size. If the protected program is disabled, the execution program selection unit 112 read the next program identifier in the selection order, and repeats the operations above. In this way, the execution program selection unit 112 selects one of the protected programs that is not disabled, in accordance with the prescribed selection order.
(b) The execution program selection unit 112 may store a prescribed selection order in accordance with the obfuscation levels of the protected programs, and selects the protected program to be executed, in accordance with the selection order. As described above, the obfuscation level is different for each protected program depending on the size of the added dummy code, the complication pattern of the control structure, the number of divisions of the modules, the strength of the encryption algorithm and so on. The higher the obfuscation level is, the more difficult analysis and tampering with the protected program become.
   The execution program selection unit 112 stores the program identifiers in the descending order of the obfuscation level. If a request for decrypting the encrypted contents occurs, the execution program selection unit 112 reads the program identifier that is at the top of the selection order, that is, the program identifier of the protected programs of which the obfuscation level is high. Next, the execution program selection unit 112 performs the same operations as (a), and selects one of the protected programs that is not disabled, in accordance with the descending order of the obfuscation level.

Also, the execution program selection unit 112 may be structured to select one of the protected programs that is not disabled, in accordance with the ascending order of the obfuscation level. Generally, the higher the obfuscation level of the protected program is, the lower the execution speed of the program is. Therefore, for innocent users who do not perform malicious analysis, it is preferable that a program executable at a high speed, that is, a program of a low obfuscation level is executed by priority.

Also, the execution program selection unit 112 maybe structured to select one of the protected programs that is not disabled in accordance with the descending order of the actual execution speeds, regardless of the obfuscation levels. If this is the case, the execution program selection unit 112 may store information indicating the execution speeds of the protected programs, in association with the program identifiers for identifying the protected programs. Alternatively, the mobile telephone 10 may perform test execution of the protected program when downloading it, to measure the execution speed of the downloaded protected program.

(5) In the above-described embodiment, the tampering detection unit 402 has a structure for calculating the tampering detection value when the protected program is loaded into the program loading unit 114 to judge whether the protected program has been tampered. However, the detection of tampering with the protected program in this invention may be performed on the program stored in the program storage unit 111, before the protected program is loaded, or may be performed just before the protected program is executed, or may be periodically performed while the loaded program is executed.

(6) In the above-described embodiment, the malicious analysis notification unit 403 of the malicious analysis detection unit 116 has a structure for unconditionally instructing the program execution unit 115 to stop execution of the protected program and generating the malicious analysis log information set if receiving a notification of a detection of malicious analysis from the debugger detection unit 401 or the tampering detection unit 402. In addition, the following case is included in the present invention.

The malicious analysis notification unit 403 prestores a threshold value indicating a prescribed number. At every reception of a notification of a detection of malicious analysis from the debugger detection unit 401 and the tampering detection unit 402, the malicious analysis notification unit 403 counts up the notification. When the count becomes more than the threshold value, the malicious analysis detection unit 403 instructs the program execution unit 115 to stop execution of the protected program and generate the malicious analysis log information set. With this structure, it is possible to prevent that a misoperation by an innocent user is judged as a malicious analysis and the currently executed program is immediately stopped.

(7) In the above-described embodiment, the protected program from which a malicious analysis has been detected (debugger detection or tampering detection) is disabled by changing the disabled-program flag of the disabled-program list from "0" to "1". However, the program disablement of the present invention may be performed by clearing the protected program stored in the program storage unit 111 with zero, or overwriting the memory with random number data, to prevent execution of the program, instead of rewriting the disabled-program flag. In this way, by making the protected program that might have been analyzed inexecutable, it is possible to reduce the risk of re-execution of the disabled protected program due to a misoperation of the user.

Also, the present invention may have a structure for deleting the disabled-program information set from the disabled-program list, instead of the structure for rewriting the disabled-program flag to "1". By deleting the disabled-program information set from the disabled-program list, it is possible to delete information relating to the address, etc. of the disabled protected program. Therefore, this reduces the risk of re-execution of the disabled protected program due to a misoperation of the user.

The above-described embodiment has a structure for judging whether the protected program is disabled based on the disabled-program flag. However, this structure is not essential. The present invention includes a case where other information is used for the judgment instead of the flag.
(8) Signature data issued by an authorized organization may be added to the disabled-program list of the present invention. If this is the case, the execution program selection unit 112 performs authentication of the signature data after reading the disabled-program list in Step S101 (FIG. 11) . If the authentication of the signature data succeeds, the processing in Step S102 and later is continued. If the authentication of the signature data fails, in other words, if the disabled-program list is invalid, the processing in Step S102 and later is not to be performed. With this structure, it is possible to prevent that the disabled protected program is judged as being not disabled due to a tampered disabled-program list, and executed.

(9) In the above-described embodiment, the program to be protected is only the original program200 that is an encrypted contents decryption program. However, a plurality of programs to be protected may be included in the present invention.
If this is the case, a plurality of protected programs are generated for each of the plurality of programs to be protected, and the program storage unit 111 stores the plurality of protected programs. Also, the disabled-program list storage unit 117 stores a disabled-program list for each of the programs to be protected.

(10) In the present invention, the protected program downloaded by the mobile telephone 10 from the program update server 20 may be overwritten in the area in the program storage unit 111 where the disabled protected program is stored, or stored in another area in the program storage unit 111. As a result, it is possible to simultaneously perform deletion of a disabled-program and addition of a new protected program. Furthermore, since the storage area for the disabled protected program is reused for storing the new protected program, it is possible to efficiently use the capacity of the program storage unit 111.

(11) In the above-described embodiment, the mobile telephone 10 has a structure for downloading a new protected program from the program update server 20 after judging that all the protected programs stored in the program storage unit 111 are disabled. However, this structure is not essential, and the timing of downloading the protected program from the program update server is not limited to this. For example, the mobile telephone 10 may download a new protected program from the program update server 20 every time one of the protected programs is disabled.

Furthermore, the mobile telephone 10 may download a new protected program from the program update server 20 even if not all the protected programs stored in the program storage unit 111 are disabled and some of them are still valid. For example, when the number of the valid protected programs stored in the program storage unit 111 becomes less than a prescribed number, the mobile telephone 10 stores a selection history in the past, and when the probability of selection of the same protected program becomes equal to or higher than a prescribed probability, a new protected program is downloaded.

With this structure, the mobile telephone 10 can acquire a new protected program if the number of the valid protected programs decreases. Therefore, it is possible to almost randomly select a protected program to be executed.
(12) In the present invention, the communication between the mobile telephone 10 and the program update server 20 maybe established as a so-called SAC (Secure Authentication Channel) which is a secure communication path, and the downloading of the protected programs and the transmission/reception of the malicious analysis log information set may be performed via the SAC. The SAC is used in the Secure Sockets Layer (SSL) and so on, and realized with well-known techniques. Therefore, the description thereof is omitted here.

(13) The present invention may be the method described above. Furthermore, the present invention may be a computer program that causes a computer to realize the method, and may be a digital signal of the computer program.
Furthermore, the present invention may be a computer-readable recording medium such as a flexible disk, a hard disk, a CD-ROM, anMO, a DVD, a DVD-ROM, a DVD-RA.M, aBD (Blu-RayDisc) or a semiconductor memory, that stores the computer program or the digital signal. Furthermore, the present invention may be the computer program or the digital signal recorded on any of the aforementioned recording medium.

Furthermore, the present invention may be the computer program or the digital signal transmitted on an electric communication line, a wireless or wired communication line, or a network of which the Internet is representative.
Furthermore, the present invention may be a computer system that includes a microprocessor and a memory, the memory storing the computer program, and the microprocessor operating according to the computer program.

Furthermore, by transferring the program or the digital signal to the recording medium, or by transferring the program or the digital signal via a network or the like, the program or the digital signal may be executed by another independent computer system.
(14) The present invention may include the case where part or all functional blocks of the mobile telephone 10 and the program update server 20 are realized as an LSI as an integrated circuit. The functional blocks may be realized by separate chips.
Alternatively, some or all of the functional blocks may be integrated onto a single chip. Note that though LSI is used here, the circuit may be variously described as IC, system LSI, super LSI or ultra LSI depending on the level of integration.

Note also that the technique used for the integration does not have to be LSI. A special-purpose circuit may be used instead. LSI circuits whose configurations can be altered after production such as the programmable FPGA (Field Programmable Gate Array) or a reconfigurable processor whose circuit cell connections and settings are configurable may also be used.
Moreover, if, due to progress in the field of semiconductor technology or the derivation of another technology, a technology to replace LSI emerges, that technology may, as a matter of course, be used to integrate the functional block. The use of biotechnology and the like is considered to be a possibility.

(15) The present invention also includes combinations of the embodiment and the modification examples above.

### Industrial Applicability

The present invention can be used in service industries of distributing digital contents as a mechanism for preventing exposure of secret information by malicious analysis. Moreover, the present invention can be used in manufacturing industries of manufacturing playback apparatuses for playing back digital contents.

## Claims

1. A secure processing apparatus comprising:
a program storage unit that stores a plurality of protected programs that have been generated based on an original program such that execution results of the original program and the protected programs are same;
a disabling unit operable to disable one of the protected programs that has been analyzed;
a selection unit operable to select one of the protectedprograms that is not disabled; and
an execution unit operable to execute the selected one of the protected programs.

2. The secure processing apparatus of Claim 1, further comprising
an analysis detection unit operable to judge whether one of the protected programs is analyzed, when the execution unit executes the one of the protected programs, wherein
the disabling unit includes
a disabled-program list storage subunit that stores a disabled-program list showing disabled protected programs, and
a disabled-program entering subunit operable to enter the one of the protected programs in the disabled-program list if the analysis detection unit judges affirmatively.

3. The secure processing apparatus of Claim 2, wherein
the disabled-program list is attached with signature data for authenticating the disabled-program list, and
the sel ectionuni t performs Verification of the signature data, and if the disabled-program list is found invalid as a result of the verification, stops selecting one of the protected programs.

4. The secure processing apparatus of Claim 1, wherein
the protected programs are obfuscated programs generated by obfuscating the original program, each having a different code depending on an obfuscation method and/or an obfuscation level applied thereto.

5. The secure processing apparatus of Claim 4, wherein
one or more of the protected programs are each obfuscated by encrypting a different partial program among partial programs included in the original program.

6. The secure processing apparatus of Claim 5, wherein
the partial program of each of the one or more of the protected programs is encrypted using a different encryption algorithm and/or a different encryption key.

7. The secure processing apparatus of Claim 4, wherein
one or more of the protected programs are each obfuscated by changing an execution order of parallel instructions among a plurality of instructions included in the original program, the parallel instructions having no dependency with each other.

8. The secure processing apparatus of Claim 4, wherein
one or more of the protected programs are each obfuscated by replacing an original instruction included in the original program with an identical instruction that includes one or more instructions, the identical instruction performing processing that is different from the original instruction and outputting a result that is the same as the original instruction.

9. The secure processing apparatus of Claim 4, wherein
one or more of the protected programs are each obfuscated by inserting a dummy instruction into the original program, the dummy instruction not affecting a result of the original program.

10. The secure processing apparatus of Claim 1, further comprising
an analysis detection unit operable to judge whether one of the protected programs is analyzed when the execution unit executes the one of the programs.

11. The secure processing apparatus of Claim 10, wherein
the analysis detection unit includes
a debugger detection subunit operable to detect a debugger while the execution unit executes the one of the protected programs, and disable the debugger if detected, and
an instruction subunit operable to give the execution unit an instruction to stop executing the one of the protected programs if the debugger detection subunit detects the debugger, wherein
upon reception of the instruction by the instruction subunit, the execution unit stops executing the one of the protected programs.

12. The secure processing apparatus of Claim 10, wherein
the analysis detection unit includes
a tampering detection subunit operable to detect tampering with the one of the protected programs, and
an instruction subunit operable to give the execution unit an instruction to stop executing the one of the protected programs if the tampering detection subunit detects the tampering, wherein
upon reception of the instruction by the instruction subunit, the execution unit stop executing the one of the protected programs.

13. The secure processing apparatus of Claim 10, wherein
the analysis detection unit includes
a log information generation subunit operable to generate analysis log information pertaining to the analysis if the analysis detection unit judges affirmatively.

14. The secure processing apparatus of Claim 13 being connected with an external server via a network, wherein
the log information generation subunit outputs the generated analysis log information to the external server.

15. The secure processing apparatus of Claim 10, wherein
the analysis detection unit further includes
a threshold value storage subunit that stores a prescribed threshold value, and
an analysis counting subunit operable to count the number of times that the analysis detection unit judges affirmatively, and
the disabling unit disables the one of the protected programs only when the number exceeds the threshold value.

16. The secure processing apparatus of Claim 1, wherein
the selection unit selects one of the protected programs at random.

17. The secure processing apparatus of Claim 1, wherein
the selection unit stores therein identification information for identifying the selected one of the protected programs, and selects one of the protected programs that is not disabled and has not been selected at random with reference to the identification information.

18. The secure processing apparatus of Claim 1, wherein
the selection unit stores therein a prescribed selection order, and selects one of the protected programs in accordance with the selection order.

19. The secure processing apparatus of Claim 1, wherein
the selection unit stores obfuscation level information showing obfuscation levels of the protected programs, and selects one of the protected programs in descending order of the obfuscation levels with reference to the obfuscation level information.

20. The secure processing apparatus of Claim 1, wherein
the selection unit stores obfuscation level information showing obfuscation levels of the protected programs, and selects one of the protected programs in ascending order of the obfuscation levels with reference to the obfuscation level information.

21. The secure processing apparatus of Claim 1, wherein
the selection unit selects one of the protected programs in descending order of execution speeds.

22. The secure processing apparatus of Claim 1 being connected with a program update server that stores therein the protected programs via a network, wherein
the selection unit includes
a judgment subunit operable to judge whether the number of protected programs that are not disabled is not more than a prescribed threshold value,
a program request unit operable to request the program update server for a new protected program, and
a program reception unit operable to receive the new protected program from the program update server.

23. An integrated circuit comprising:
a program storage unit that stores a plurality of protected programs that have been generated based on an original program such that execution results of the original program and the protected programs are same;
a disabling unit operable to disable one of the protected programs that has been analyzed;
a selection unit operable to select one of the protected programs that is not disabled; and
an execution unit operable to execute the selected one of the protected programs.

24. A secure processing method used by a secure processing apparatus,
the secure processing apparatus storing a plurality of protected programs that have been generated based on an original program such that execution results of the original program and the protected programs are same, and
the secure processing method comprising:
a disabling step of disabling one of the protected programs that has been analyzed;
a selection step of selecting one of the protected programs that is not disabled; and
an execution step of executing the selected one of the protected programs.

25. A secure processing system that includes a secure processing apparatus and a program update server connected with each other via a network,
the secure processing apparatus comprising:
a first storage unit that stores a plurality of protected programs that have been generated based on an original program such that execution results of the original program and the protected programs are same;
a disabling unit operable to disable one of the protected programs that has been analyzed;
a selection unit operable to select one of the protectedprograms that is not disabled;
an execution unit operable to execute the selected one of the protected programs; and
a request unit operable to request the program update server for a protected program if the number of protected programs that are not disabled is not more than a prescribed threshold value, and
the program update server comprising:
a second storage unit that stores a plurality of protected programs;
a request reception unit operable to receive a request from the request unit for the protected program, and
the transmission unit operable to read one or more of the protected programs from the second storage unit upon reception of the request by the request reception unit, and transmit the read protected programs to the secure processing apparatus.
